# EUROPÄISCHE PATENTSCHRIFT

(11) **EP 2 444 456 B1**
(45) Veröffentlichungstag und Bekanntmachung des Hinweises auf die Patenterteilung: **03.07.2013**
(21) Anmeldenummer: 11184868.5
(22) Anmeldetag: 12.10.2011
(51) Int. Cl.: C08K 3/10, C08K 5/09

(54) **Selbsthaftende Härterzusammensetzung**
Self-adhesive hardener composition
Composition de durcisseur autocollante

(30) Priorität: 20.10.2010 DE 102010042712
(43) Veröffentlichungstag der Anmeldung: 25.04.2012
(73) Patentinhaber: Wacker Chemie AG, 81737 München (DE)
(72) Erfinder: Sixt, Torsten, Dr., 84561 Mehring (DE); Neuhauser, Franz, 5132 Geretsberg (AT)
(74) Vertreter: Mieskes, Klaus Theoderich

(56) Entgegenhaltungen:
- DE-A1-102006 060 357
- US-A1- 2008 026 322

## Beschreibung

Zweikomponentige (2K) Silikonzusammensetzungen sind im Stand der Technik schon länger bekannt und werden oft als Klebe- und Dichstoffe in diversen Applikationen eingesetzt. Bei Raumtemperatur vernetzende zweikomponentige Silicone werden als "room temperature vulcanizing 2 part silicones" (RTV-2) bezeichnet. Eine der beiden Komponenten wird häufig als Polymerzusammensetzung oder als A-Komponente bezeichnet.
Die zweite Komponente wird häufig Härterzusammensetzung oder auch B-Komponente genannt.

Solche Formulierungen enthalten typischerweise Zinnverbindungen als Vernetzungskatalysatoren, welche die Vernetzung (Polykondensation) der Polymere mit den Vernetzerkomponenten bei Raumtemperatur katalysieren wie beispielsweise beschrieben in Walter Noll, Chemistry and Technology of Silicones, 1968, 2. Ausgabe, Seite 395ff.

Obwohl die Polykondensationsreaktion auch ohne Katalysator abläuft, werden Katalysatoren benötigt, um die Vernetzung in akzeptablen Zeiträumen ablaufen zu lassen. Solche Katalysatoren sind zumeist auf Basis von Schwermetallen, zumeist Organozinnverbindungen. Die in der letzten Zeit verschärfte Diskussion zum Risikopotential solcher Organozinnverbindungen einerseits und die bekannte Fähigkeit von Zinnverbindungen, auch die Rückreaktion zu begünstigen (Reversion) machen die Suche nach alternativen Katalysatoren notwendig. Bisherige Lösungsansätze haben allerdings gezeigt, dass die Reaktivität alternativer Katalysatoren nicht hinreichend gut, oder aber die Zusammensetzung nicht lagerstabil ist. So neigen beispielsweise Bismutcarboxylate in Kombination mit aminofunktionellen Alkoxysilanen dazu, einen kolloidalen Bi(0)-Niederschlag zu bilden, wobei die verfügbare Menge an aktivem Bi(III) abnimmt und die Lagerstabilität damit nicht gegeben ist.

Titan-katalysierte, einkomponentige Kondensationsmassen sind Stand der Technik wie beispielsweise in WO 01/49774 A2 beschrieben, allerdings nicht auf Zweikomponentensysteme anwendbar, da Titanverbindungen zu spontaner Vulkanisation von dort eingesetzten α,ω-dihydroxy-funktionellen Polymeren führen. Außerdem werden Titanverbindungen durch aminhaltige Verbindungen massiv inhibiert, was die Formulierung von selbsthaftenden Massen ausschließt.

Andere Metallverbindungen wie beispieslweise Zink- oder Aluminiumacetylacetonat führen bei Einsatz als Katalysator zu einer Funktionalisierung der reaktiven Endgruppen also eine Konkurrenzreaktion zur Vernetzung, was eine Konversion zum RTV-1 Mechanismus bewirkt.

Als zinnfreie Alternative wird in WO 2009/080266 kalziniertes Kaolin als Katalysator eingesetzt, in EP 0 933 398 A gemeinsam mit basischen Komponenten. Da Kaolin in dispergierter Form vorliegt und in WO 2009/080266 in Mengen von 3 bis 400 Teilen bezogen auf 100 Teile Polymer eingesetzt wird, ergibt sich der Nachteil, keine transparenten Massen herstellen zu können.

Aufgabe der vorliegenden Erfindung ist daher die Bereitsstellung von Härterzusammensetzungen für 2K-Siliconzusammensetzungen, die frei von im Sinne des Gefahrstoffrechts bedenklichen Katalysatoren und zudem selbsthaftend sind. Die dafür verwendeten Haftvermittler dürfen den Katalysator nicht inhibieren. Des Weiteren sollen typische Topfzeiten für die industrielle Verarbeitung erreicht werden und nach Lagerung kein Reaktivitätsverlust erfolgen.

Diese Aufgabe wurde gelöst durch in Anspruch 1 beschriebenen eine Härterzusammensetzung kondensationsvernetzenden RTV-2-Siliconzusammensetzungen enthaltend
(A) Mindestens einen Vernetzer,
(B) Mindestens einen Vernetzungskatalysator ausgewählt aus der Gruppe der Lithiumverbindungen ausgenommen deren Hydroxide,
(D) Mindestens ein funktionelles Silan als Haftvermittler.

Die erfindungsgemäße Härterzusammensetzung wird in RTV-2-Sytemen zusammen mit einer Polymerzusammensetzung als zweite Komponente eingesetzt. Solche Polymerzusammensetzungen für RTV-2-Systeme sind dem Fachmann seit langem bekannt. Sie enthalten üblicherweise hydroxyterminierte Polydimethylsiloxane als vernetzungsfähige Polymere, meist trimethylsilyl-terminierte Polydimethylsiloxane als Weichmacherkomponente, des Weiteren verstärkende oder nichtverstärkende Füllstoffe wie beispielsweise Kieselsäure, Ruß, Quarz, Kreide, Diatomeenerde etc. Optionale Komponenten wie Hitzestabilisatoren, Additive zur Optimierung von Rheologie oder speziellen Eigenschaften, Fungizide werden darüber hinaus eingesetzt.

Bei den erfindungsgemäß eingesetzten Vernetzern (A) handelt es sich vorzugsweise um Organosiliciumverbindungen der allgemeinen Formel (I)

Z_{c}SiR²_{(4-C)} (I),

wobei
R² unabhängig voneinander gleich oder verschieden sein kann und einwertige, gegebenenfalls mit Halogenen substituierte Kohlenwasserstoffreste, die durch Sauerstoffatome unterbrochen sein können, bedeutet,
Z unabhängig voneinander gleich oder verschieden sein kann und hydrolysierbare Reste bedeutet und
c 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der allgemeinen Formel (I), wie auch um Teilcohydrolysate, d.h. Teilhydrolysate von mindestens zwei verschiedenen Arten von Organosiliciumverbindungen der allgemeinen Formel (I). Diese erfindungsgemäßen Vernetzer bzw. Teilhydrolysate haben ein maximales Gewichtsmittel Mw von 1.200 g/mol.

Obwohl in Formel (I) nicht angegeben, können die erfindungsgemäß eingesetzten Organosiliciumverbindungen herstellungsbedingt einen geringen Anteil von Hydroxylgruppen, bevorzugt bis maximal 5 % aller Si-gebundenen Reste, aufweisen.

Handelt es sich bei den in den erfindungsgemäßen Massen eingesetzten Vernetzern (A) um Teilhydrolysate von Organosiliciumverbindungen der Formel (I), so sind solche mit bis zu 10 Siliciumatomen bevorzugt.

Bevorzugt handelt es sich bei Rest R² um einwertige Kohlenwasserstoffreste mit 1 bis 18 Kohlenstoffatomen, die gegebenenfalls mit Halogenatomen, Ethergruppen oder (Poly)glykolresten substituiert sind, wobei letztere aus Oxyethylen- und/oder Oxypropyleneinheiten aufgebaut sind. Es kann sich bei Rest R² aber auch um zweiwertige Reste handeln, die z.B. zwei Silylgruppen miteinander verbinden.

Beispiele für Reste R² sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pen-tylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für mit Sauerstoff unterbrochenen Reste R² sind Methoxyethyl-, Ethoxyethyl- und der Ethoxyethoxyethylrest.

Beispiele für zweiwertige Reste **R²** sind Polyisobutylendiylreste und propandiylterminierte Polypropylenglykolreste.

Für Rest R² sind Kohlenwasserstoffreste mit 1 bis 12 Kohlenstoffatomen bevorzugt und der Methyl- und der Vinylrest besonders bevorzugt.

Beispiele für Z sind alle bisher bekannten hydrolysierbaren Reste, wie z.B. über Sauerstoffatom oder Stickstoffatom an Siliciumatom gebundene, gegebenenfalls substituierte Kohlenwasserstoffreste.

Bevorzugt handelt es sich bei Rest Z um Rest -OR¹, wobei R¹ substituiere oder unsubstituierteKohlenwasserstoffreste, die durch Sauerstoffatome unterbrochen sein können, bedeutet. Beispiele für Z sind Methoxy-, Ethoxy-, n-Propoxy-, i-Propoxy-, n-Butoxy-, i-Butoxy-, s-Butoxy-, tert-Butoxy- und 2-Methoxyethoxyrest, Aminoreste, wie Methylamino-, Dimethylamino-, Ethylamino-, Diethylamino- und Cyclohexylaminorest, Amidoreste, wie N-Methylacetamido- und Benzamidorest, Aminoxyreste, wie der Diethylaminoxyrest, Oximoreste, wie Dimethylketoximo-, Metyhlethylketoximo- und Methylisobutylketoximorest, und Enoxyreste, wie der 2-Propenoxyrest sowie Acyloxyresten wie beispielsweise Acetylgruppen.

Bevorzugt handelt es sich bei den in den erfindungsgemäßen Massen eingesetzten Vernetzern (A) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 1,2-Bis(trimethoxysilyl)ethan, 1,2-Bis(triethoxysilyl)ethan, sowie Teilhydrolysate der genannten Organosiliciumverbindungen, wie z.B. Hexaethoxydisiloxan.

Besonders bevorzugt handelt es sich bei den in den erfindungsgemäßen Massen eingesetzten Vernetzern (A) um Tetraethoxysilan, Tetrapropoxysilan, Methyltrimethoxysilan, Methyltriethoxysilan, Vinyltrimethoxysilan, Vinyltriethoxysilan, Phenyltrimethoxysilan, 1,2-Bis(trimethoxysilyl)ethan, 1,2-Bis(triethoxysilyl)ethan, sowie deren Teilhydrolysate, insbesondere um Tetraethoxysilan, 1,2-Bis(triethoxysilyl)ethan, Vinyltrimethoxysilan, Vinyltriethoxysilan und deren Teil- und Mischhydrolysate.

Die in den erfindungsgemäßen Härterzusammensetzungen eingesetzten Vernetzer (A) sind handelsübliche Produkte bzw. können nach in der Siliciumchemie bekannten Verfahren hergestellt werden.

Die erfindungsgemäßen Vernetzer (A) werden in solchen Mengen eingesetzt, dass sich ein mindestens zweifach molarer Überschuss hydrolysierbare oder hydrolysierte Vernetzerfunktionen bezogen auf den Endgruppenanteil der zu vernetzenden Bestandteile ergibt. Vorzugsweise wird ein molares Verhältnis von Vernetzerfunktionen zu den zu vernetzenden Gruppen von 2:1 bis 10:1 eingestellt.

Als erfindungsgemäße Katalysatoren (B) werden Litthium- Verbindungen verwendet, ausgenommen deren Hydroxide.

Als Katalysator (B) dienen die Verbindungen von Lithium. Besonders bevorzugt werden die entsprechenden Carboxylate.

Die erfindungsgemäßen Härterzusammensetzungen enthalten Katalysator (B) in den für die Kondensationsreaktion üblichen Mengen. In anwendungsfertigen RTV-2 Mischungen (Härterzusammensetzung + Polymerzusammensetzung) liegen diese bei Li-Verbindungen im Bereich von 50-1.000 ppm jeweils bezogen auf das Metall. Besonders bevorzugt im Bereich von 100-500ppm.

Die erfindungsgemäßen Härtezusammensetzungen enthalten als weitere Komponente Haftvermittler (D). Sie werden als funktionelle Silane oder Kupplungsagenzien betrachtet und unterscheiden sich von Komponente (A). Beispiele für die in den erfindungsgemäßen Massen eingesetzten Haftvermittler (D) sind Silane und Organopolysiloxane mit funktionellen Gruppen, wie beispielsweise solche mit Glycidoxy-, Amino- oder Methacryloxyresten. Des Weiteren können als Haftvermittler (D) auch Silane mit hydrolysierbaren Gruppen und SiC-gebundenen Vinyl-, Acryloxy-, Methacryloxy-, Epoxy-, Säureanhydrid-, Säure-, Ester-, cyanurato-, carbamato- oder ureidofunktionelle Gruppen sowie deren Teil- und Mischhydrolysate verwendet werden. Bevorzugt als Haftvermittler sind Amino-, acryl-, epoxy-, cyanurato-, carbamato- oder ureidofunktionelle Silane mit hydrolysierbaren Gruppen und deren Teilhydrolysate. Bevorzugt ist (D) in solchen Mengen enthalten, dass auf 100 Gewichtsteile der katalysierten, anwendungsfertigen RTV-2 Mischung (=Härtezusammensetzung + Polymerzusammensetzung) einen Anteil von vorzugsweise bis 50 Gewichtsteilen, besonders bevorzugt 0,1 bis 20 Gewichtsteilen, insbesondere 0,25 bis 10 Gewichtsteilen (D) enthält.

Als weiteren Bestandteil kann darüber hinaus der Härterzusammensetzung die Komponente (C) zugegeben werden, um das Mischverhältnis der Härterzusammensetzung mit der Polymerzusammensetzung in einem RTV-2-System besser justieren zu können und die Mischbarkeit aller Bestandteile zu bewerkstelligen. Komponente (C) dient also der Volumenerhöhung der Härterzusammensetzung, was eine bessere Steuerung der Dosierung beim Mischen ermöglicht und stellt die Homogenität des Stoffgemisches sicher.

Als Extenderpolymer (C) werden lineare oder verzweigte Organosiliziumverbindungen oder auch organische Polymere oder nichtflüchtige Kohlenwasserstoffe eingesetzt.

Die Härterzusammensetzung kann zudem weitere Bestandteile (E), die dem Fachmann seit langem bekannt sind, enthalten. Beispiele für (E), die bei den erfindungsgemäßen Zusammensetzungen verwendet werden können, sind Füllstoffe, wie verstärkende und nicht verstärkende Füllstoffe, Weichmacher, lösliche Farbstoffe, anorganische und organische Pigmente, Lösungsmittel, Fungicide, Duftstoffe, Dispergierhilfsmittel, rheologische Additive, Korrosionsinhibitoren, Oxidationsinhibitoren, Lichtschutzmittel Hitzestabilisatoren, flammabweisend machende Mittel und Mittel zur Beeinflussung der elektrischen Eigenschaften.

Die erfindungsgemäße Härterzusammensetzung wird als eine Komponente in kondensationsvernetzenden RTV-2-Siliconzusammensetzungen eingesetzt. Diese kondensationsvernetzenden RTV-2-Siliconzusammensetzungen finden wiederum beispielsweise als Klebe- und Dichtstoff in diversen Applikationen ihre Anwendung. Auch für Verguss, Überzug oder zur Isolierung von elektrischen oder elektronischen Bauteilen können solche Massen eingesetzt werden.

### Beispiele

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1.000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle Viskositätsangaben auf die dynamische Viskosität bei einer Temperatur von 20°C und einer Scherung von 1 s⁻¹. Die nachfolgenden Beispiele erläutern die Erfindung, ohne dabei beschränkend zu wirken.

Es werden folgende Abkürzungen verwendet:
- Shore A: Härte nach DIN 53505
- RD: Reißdehnung nach DIN 53504-85S1 in %
- RF: Reißfestigkeit nach DIN 53504-85S1 in N/mm²

### Beispiel 1: Polymerzusammensetzung

Als Polymerzusammensetzung wurde das von Wacker Chemie AG, München kommerziell erhältliche ELASTOSIL® RT 774 verwendet.

### Beispiele für Härterzusammensetzungen

### Beispiel 2: (nicht erfindungsgemäß)

Als Härterzusammensetzung für das Vergleichbeispiel wurde der von Wacker Chemie AG, München kommerziell erhältliche Härter T77 verwendet.

### Beispiel 3 (erfindungsgemäß)

15 Teile Trimethylsilyl-endständiges Polydimethylsiloxan mit einer Viskosität von 1.000 mPa·s und 30 Teile eines vinylendständigen Polydimethylsiloxans werden mit 20 Teilen eines teilhydrolysierten Tetraethylsilikats TES40 (Wacker Chemie AG), 5 Teilen g-Aminopropyltriethoxysilan, 5 Teilen N-Aminoethyl-Aminopropyltrimethoxysilan und 15 Teilen Oktasoligen Li 2 (der Firma Borchers,Monheim) zu einer homogenen Mischung vermischt.

### Beispiel 4 (erfindungsgemäß)

30 Teile einer hydroxylgruppenfreien Harzkomponente enthaltend 30% T- und 70% D-Einheiten mit einem Gewichtsmittel von 2.800 g/mol werde mit 18 Teilen eines teilhydrolysierten Tetraethylsilikats TES40, 20 Teilen g-Aminopropyltriethoxysilan, 7 Teilen Ruß Ensacko MS(der Firma Timcal, Düsseldorf) sowie 25 Teilen Oktasoligen Li 2 (der Firma Borchers, Monheim) zu einer homogenen Mischung vermischt.

### Beispiel 5 (erfindungsgemäß)

30 Teile einer hydroxylgruppenfreien Harzkomponente enthaltend 30% T- und 70% D-Einheiten mit einem Gewichtsmittel von 2.800 g/mol werde mit 30 Teilen eines teilhydrolysierten Tetraethylsilikats TES40, 15 Teilen g-Aminopropyltriethoxysilan sowie 25 Teilen Oktasoligen Li 2 (der Firma Borchers,Monheim) zu einer homogenen Mischung vermischt.

### Beispiel 6 (erfindungsgemäß)

25 Teile einer hydroxylgruppenfreien Harzkomponente enthaltend 30% T- und 70% D-Einheiten mit einem Gewichtsmittel von 2800 g/mol werde mit 20 Teilen eines teilhydrolysierten Tetraethylsilikats TES40, 20 Teilen g-Aminopropyltriethoxysilan, 10 Teilen Ruß (Ensacko MS) zu einer standfesten Paste homogenisiert und mit 25 Teilen Oktasoligen Li 2 (der Firma Borchers, Monheim) versetzt.

Das jeweilige Mischungsverhältnis zwischen Polymerzusammensetzung aus Beispiel 1 und Härterzusammensetzung aus Beispiel 2 bis 6 betrug 9:1. Die Topfzeit ist definiert als Dauer bis zum Überschreiten von 1.000 Pa·s, bestimmt per Platte-Kegel-Rheometer bei D = 1,0 s-1.

**Tabelle 1**

| Beispiele | 2 | 3 | 4 | 5 | 6 |
|---|---|---|---|---|---|
| Topfzeit [min] | 10 | 20 | 60 | 40 | 60 |
| Shore A | 46 | 26 | 28 | 30 | 25 |
| RF | 1,8 | 1,6 | 1,2 | 1,4 | 1,2 |
| RD | 200 | 250 | 310 | 250 | 350 |

Tabelle 1 zeigt die Topfzeit nach Mischen der beiden RTV-2-Komponenten und die Elastomereigenschaften nach 3 Tagen Vulkanisation. Mit den erfindungsgemäßen Härterzusammensetzungen konnte sehr gute Topfzeiten und gute Tiefenvulkanisation erreicht werden wobei die anderen Elastomereigenschaften ebenfalls die Anforderungen an solche Systeme voll erfüllten.

## Patentansprüche

1. Kondensationsvernetzende RTV-2-Siliconzusammensetzungen **dadurch gekennzeichnet, dass** eine der beiden Komponenten eine Härterzusammensetzung ist enthaltend
(A) Mindestens einen Vernetzer,
(B) Mindestens einen Vernetzungskatalysator ausgewählt aus der Gruppe enthaltend Lithiumverbindungen, ausgenommen deren Hydroxide,
(D) Mindestens ein funktionelles Silan als Haftvermittler.

2. Herstellung der Härterzusammensetzung gemäß Anspruch 1 durch Mischen der Komponenten (A), (B) und (D).

3. Verwendung der Kondensationsvernetzenden RTV-2-Siliconzusammensetzungen gemäß Anspruch 1 als Klebe- und Dichtstoff.

## Claims

1. Condensation-crosslinking RTV-2 silicone compositions, **characterized in that** one of the two components is a hardener composition which comprises
(A) at least one crosslinker,
(B) at least one crosslinking catalyst selected from the group consisting of lithium compounds, with the exception of the hydroxides thereof,
(D) at least one functional silane as coupling agent.

2. Production of the hardener composition according to Claim 1 by mixing the components (A), (B) and (D).

3. Use of the condensation-crosslinking RTV-2 silicone compositions according to Claim 1 as adhesive and sealant.

## Revendications

1. Compositions de silicone RTV-2 réticulant par condensation, **caractérisées en ce qu'**un des deux composants est une composition de durcisseur contenant :
(A) au moins un agent de réticulation,
(B) au moins un catalyseur de réticulation choisi dans le groupe contenant les composés de lithium, à l'exception de leurs hydroxydes,
(D) au moins un silane fonctionnel en tant que promoteur d'adhésion.

2. Fabrication de la composition de durcisseur selon la revendication 1 par mélange des composants (A), (B) et (D).

3. Utilisation des compositions de silicone RTV-2 réticulant par condensation selon la revendication 1 en tant qu'adhésif et matériau d'étanchéité.
